# EUROPEAN PATENT SPECIFICATION

(11) **EP 2 600 590 B1**
(45) Date of publication and mention of the grant of the patent: **22.03.2017**
(21) Application number: 11811731.6
(22) Date of filing: 28.01.2011
(51) Int. Cl.: H04L 29/08

(54) **METHOD FOR REALIZING NESTING OF SERVICES WITH DIFFERENT CATEGORIES AND SYSTEM THEREOF**
VERFAHREN ZUR VERSCHACHTELUNG VON DIENSTEN MIT UNTERSCHIEDLICHEN KATEGORIEN UND SYSTEM DAFÜR
PROCÉDÉ DE RÉALISATION D'IMBRICATION DE SERVICES AVEC DIFFÉRENTES CATÉGORIES ET SYSTÈME ASSOCIÉ

(30) Priority: 27.07.2010 CN 201010241617
(43) Date of publication of application: 05.06.2013
(73) Proprietor: ZTE Corporation, Shenzhen, Guangdong 518057 (CN)
(72) Inventor: HAN, Yinjun, Shenzhen Guangdong 518057 (CN); ZHANG, Guobing, Shenzhen Guangdong 518057 (CN)
(74) Representative: Carangelo, Pierluigi
(86) International application number: PCT/CN2011/070740
(87) International publication number: WO 2012/013029

(56) References cited:
- WO-A1-2004/103012
- WO-A2-01/59987
- CN-A- 101 222 483
- CN-A- 101 247 641
- CN-A- 101 729 930
- CN-A- 101 924 789
- US-A1- 2009 119 303
- US-A1- 2010 020 790
- YU ZHIHU ET AL.: 'Solutions to Multi-service Triggering Problem in Intelligent etwork' JOURNAL OF BEIJING UNIVERSITY OF POSTS AND TELECOMMUNICATIONS vol. 29, May 2006, pages 52 - 56, XP008168817
- YOU WEI ET AL.: 'Plan Research 3G Migration Intelligence Network Construction and Multi-services Trigger' JOURNAL OF JILIN UNIVERSITY vol. 25, no. 4, July 2007, pages 435 - 439, XP008168841

## Description

### Field of the Invention

The present invention relates to the multi-service nesting technology in the communication network, and particularly to a method and a system for nesting different types of services.

### Background of the Invention

The intelligent network is developed on the basis of the existing telephone network. The intelligent network is a telephone network or integrated service digital network with intelligent functions. The network intelligence thereof is distributed on several service control points in the entire network. Control of the network intelligence is achieved by software so as to provide more flexible intelligent control function. In the intelligent network, it is not required to reform the office and the switches when new services are added. Instead, the telecom personnel, even the user, can provide new services at any time by modifying the software. The intelligent network has gone through several decades of development since 1990s, and currently is very mature and stable.

The applications of the intelligent network includes: fixed intelligent network service, mobile intelligent network service, and integrated intelligent network service. The fixed intelligent network service mainly refers to the centralized called payment service, automatic debit card service, public call service, ads telephone service, etc. The mobile intelligent network service mainly refers to the mobile intelligent network service in the Global System for Mobile Communications (GSM) system and the Code Division Multiple Access (CDMA) system, such as prepaid service, mobile virtual dedicated network service, time division area division service, etc. The integrated intelligent network service supports the Intelligent Network Application Protocol (INAP), the Customized Applications for Mobile network Enhanced Logic (CAMEL), and the Wireless Intelligent Network (WIN) specifications simultaneously. The integrated intelligent network service can cover the fixed telephone network, the GSM network and the CDMA network.

Currently, under the related intelligent network architecture, one user can only trigger one service at the same moment, which limits the possibility for one user to subscribe a plurality of services simultaneously. If a plurality of services needs to be realized, a plurality of service logics has to be placed into one service for implementation. This significantly limits the development of the intelligent network service. On the other hand, when the related intelligent network service is fully developed, if new functions are to be added onto the existing services, the existing services have to be modified. The operators have to pay expensive service maintenance fee on the existing services, which also affects the stability of the intelligent network service.

In order to support more service functions, the development trend of the telecom is to separate the service from the control, and to separate the control from the bearer. The fixed and mobile core networks at the bottom layer are to be upgraded and reformed to IP based soft switch (SS) network or IP multimedia subsystem (IMS). The intelligent network server at the application layer is also replaced by the application server with session initiation protocol (SIP) access function.
However, the upgrade and reform of the network will impact the original network users. Therefore, the following problems have to be resolved. First, when upgrading the network, the service ability of the original network has to be kept to protect the original network investments. Second, when opening new service ability for the original network users, the new service ability should be compatible with the original service. The related art still has no technical solution to solve the above problems. US 2010/0020790 provide related technical solutions; however, the above mentioned problem still remains unsolved.

### Summary of the Invention

In view of this, the main object of the present invention is to provide a method and system for nesting different types of services, which can add new service abilities without affecting the existing network service when upgrading the network.

In order to solve the above technical problems, the technical solution of the present invention is achieved as such:
a method as in claim 1
for nesting different types of services, comprising: a core network sending an INVITE message to a service proxy server according to subscription information of a user to initiate service trigger; and the service proxy server triggering a first application server of a service type according to the received INVITE message and preset configuration information, and further triggering a second application server of another service type according to an event request message sent by the first application server and/or the INVITE message sent by the core network and the configuration information.

The first application server is an application server bearing a Customized Applications for Mobile network Enhanced Logic (CAMEL) service, and the second application server is an application server bearing a Session Initiation Protocol (SIP) service; and the service proxy server triggering the second application server of another service type according to the event request message sent by the first application server and/or the INVITE message sent by the core network and the configuration information comprises: when the service proxy server generates an InitialDP message to trigger the first application server bearing the CAMEL service, the first application server sending an accounting request message to the service proxy server according to a service logic of the first application server, and the service proxy server generating the INVITE message to trigger the second application server bearing the SIP service according to the accounting request message and/or the INVITE message sent by the core network, and the preset configuration information; or,
the first application server is an application server bearing an SIP service, and the second application server is an application server bearing a CAMEL service; and when the service proxy server generates the INVITE message to trigger the first application server bearing the SIP service, the first application server sending an INVITE call request message to the service proxy server according to a service logic of the first application server, and the service proxy server generating an InitialDP message to trigger the second application server bearing the CAMEL service according to the INVITE call request message and/or the INVITE message sent by the core network, and the preset configuration information.

After the first application server and the second application server are triggered, the second application server sending the INVITE call request message to the core network via the service proxy server to request to call a called user.

The method further comprises: after the called user rings, the core network delivering a ring response to the second application server via the service proxy server, and then the second application server sending the ring response to the core network via the service proxy server to notify a calling user that the called user is ringing.

The method further comprises: after the called user answers, the core network delivering an answer response to the second application server via the service proxy server, the second application server reporting a called user answer event to the first application server and sending the answer response to the core network via the service proxy server to notify a calling user that the called user is answering, and the service proxy server reporting an accounting event report to the first application server.

The method further comprises: after the called user hangs up, the core network sending a BYE request to the second application server via the service proxy server, the second application server sending the BYE request to the core network via the service proxy server to request to terminate a session of the calling user, the service proxy server reporting the accounting event report and a called user on-hook event to the first application server, and the first application server sending a call release instruction to the service proxy server.

A system as in claim 6 for nesting different types of services comprises:
a core network, configured to send an INVITE message to a service proxy server according to subscription information of a user to initiate service trigger;
the service proxy server, provided between the core network and the application service, and configured to trigger a first application server of a service type according to the received INVITE message and preset configuration information, and further trigger a second application server of another service type according to an event request message sent by the first application server and/or the INVITE message sent by the core network and the configuration information; and
at least one application server, configured to trigger a corresponding service according to a trigger message of the service proxy server, and send the event request message to the service proxy server.

The first application server is an application server bearing a Customized Applications for Mobile network Enhanced Logic (CAMEL) service, and the second application server is an application server bearing a Session Initiation Protocol (SIP) service; and the service proxy server is further configured to receive an INVITE call request sent by the second application server, and send the INVITE call request to the core network to request to call a called user.

The service proxy server is further configured to, after a called user rings, receive a ring response sent by the core network and deliver the ring response to the second application server; and is further configured to receive the ring response sent by the second application server and send the ring response to the core network to notify a calling user that the called user is ringing, and after the called user answers, receive an answer response sent by the core network and deliver the answer response to the second application server; and is further configured to receive an answer response sent by the second application server and send the answer response to the core network to notify the calling user that the called user is answering; and is further configured to report an accounting event report to the first application server.

The service proxy server is further configured to, after the called user hangs up, receive a BYE request sent by the second application server and send the BYE request to the core network to notify the calling user that the called user hangs up; and is further configured to report an on-hook event to the first application server and receive a call release instruction sent by the first application server.

The advantage of the method and system in the present invention is as follows. The service proxy server can be used to achieve the information interaction between the core network and the application server. The service nesting of original services and newly added services can be realized without affecting the existing network services. This solution solves the defect that the original services have to be modified when adding new services in the related network, and is advantageous for stabilizing and maintaining the related network.

### Brief Description of the Drawings

Fig. 1 is a structural schematic diagram of a system for nesting different types of services according to the embodiment of the present invention; and
Fig. 2 is a flowchart of a method for nesting different types of services according to the embodiment of the present invention.

### Detailed Description of Embodiments

The basic concept of the present invention is that: the core network sends the INVITE message to the service proxy server according to the subscription information of the user to initiate service trigger; and the service proxy server triggers the first application server of a service type according to the received INVITE message and preset configuration information, and further triggers the second application server of another service type according to the event request message sent by the first application server and/or the INVITE message sent by the core network and the configuration information.

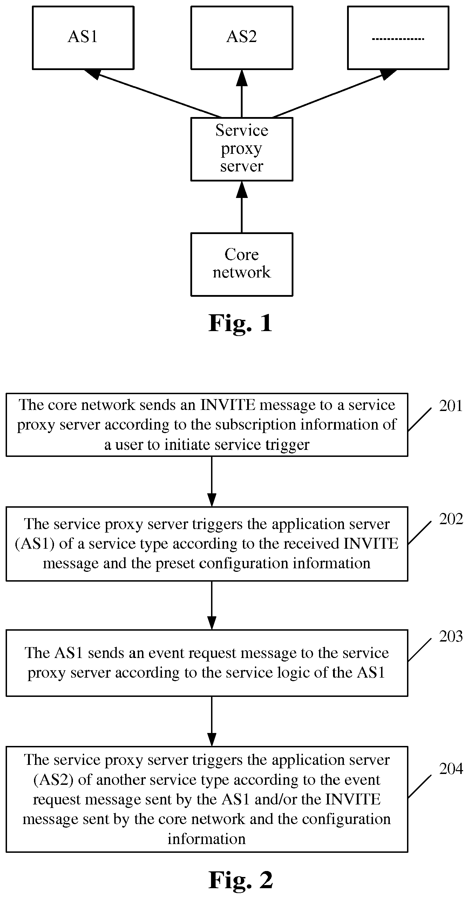

As shown in Fig. 1, in the system for nesting different types of services, the present invention takes the soft switch network as the core network, takes the application server (AS) as the intelligent network application server. And, a service proxy server is provided between the core network and the application server. The service proxy server accesses by the INVITE message of the core network, triggers the application server of a type of service according to the service type triggered in the configuration information and the triggering sequence. In this case, the triggered application server can be referred to as the first application server. Then, the application server of other newly added service is triggered according to the INVITE message and/or the event request message sent by the first application server and the configuration information. The application server of other newly added service can be referred to as the second application server. As such, from the view of the core network, the service proxy server is equivalent to an application server, and from the view of the application server, the service proxy server represents the core network.

As shown in Fig. 2, the method for nesting different types of services according to the embodiment of the present invention comprises the following steps.

Step 201, the core network sends an INVITE message to a service proxy server according to the subscription information of a user to initiate service trigger.

In this step, the INVITE message can be a CAMEL message or an SIP message, wherein the INVITE message comprises the calling and called numbers.

Step 202, the service proxy server triggers the application server (AS1) of a service type according to the received INVITE message and the preset configuration information.

In this step, the configuration information can comprise: the triggered service type, the triggering sequence, the triggering mode, the address of the application server, etc. The service proxy server can trigger the application server (AS1) of a service type according to the calling and called numbers in the INVITE message and the configuration information based on the triggering sequence.

Step 203, the AS1 sends an event request message to the service proxy server according to the service logic of the AS 1.

In this step, if the AS1 is an application server bearing the CAMEL service, then the event request message is an accounting request message, comprising: monitor event (RRBE), application accounting event (AC), connect event (Connect), continue event (Continue), etc. If the AS1 is an application server bearing the SIP service, then the event request message is an INVITE call request message.

Step 204, the service proxy server triggers the application server (AS2) of another service type according to the event request message sent by the AS 1 and/or the INVITE message sent by the core network and the configuration information.

In this step, if the AS1 is an application server bearing the CAMEL service, then the service proxy server triggers the application server of another service type according to the configuration information, the connect number sent by the AS1 and/or the INVITE message sent by the core network based on the triggering sequence.

Hereinafter, the solution of the present invention is described in detail by embodiments.

In this embodiment, assuming that the original service is a CAMEL service, and the newly added service is an SIP service. The service proxy server can access by way of an INVITE message. The service proxy server triggers the original CAMEL service, and triggers the newly added SIP service according to the configuration information about the service proxy, so as to complete the nesting of the CAMEL service and the SIP service. In this case, the AS1 is an application server bearing the CAMEL service, and the AS2 is an application server bearing the SIP service.

Hereinafter, the method in the present invention is described in detail. The steps of this embodiment are as follows.
Step 301, the core network sends an INVITE message to the service proxy server according to the subscription information of the user to initiate service trigger, and the service proxy server replies with 100 temporary response to the core network.
Step 302, the service proxy server generates a trigger message (InitialDP message) according to the preset configuration information, and sends the trigger message to the AS1 bearing the CAMEL service to trigger the CAMEL service.
   In this step, the configuration information preset by the service proxy server comprises: the triggered service type, the triggering sequence, the triggering mode, the address of the application server, etc. The service proxy server acquires information such as the service type to be triggered, the triggering mode and the address of the application server, etc. from the configuration information according to the user attributes in the INVITE message. According to the triggering sequence, when acquiring the information that the CAMEL service is to be triggered from the configuration information, the service proxy server generates a CAMEL specified InitialDP message to send to the AS1 to trigger the AS1 bearing the CAMEL service.
Step 303, the AS1 sends an accounting request message to the service proxy server according to the service logic of the AS1 to request for accounting.
   In this step, the accounting request message sent by the AS1 to the service proxy server comprises: the monitor event, the application accounting event, the connect event, the continue event, etc.
Step 304, the service proxy server generates an INVITE message according to the configuration information, the accounting request message sent by the AS1 and/or the INVITE message sent by the core network, and sends the INVITE message to the AS2 bearing the SIP service to trigger the SIP service; and the AS2 replies with 100 temporary response to the service proxy server.
   In this step, the service proxy server acquires the configuration information corresponding to the connect number according to the connect number in the event request message sent by the AS1 and/or the INVITE message sent by the core network.
Step 305, the AS2 sends an INVITE call request message to the service proxy server according to the service logic of the AS2. The service proxy server replies with 100 temporary response to the AS2.
   In this step, the AS2 sends an INVITE call request message to the service proxy server to request the service proxy server to call the called user. The service proxy server replies with 100 temporary response to the AS2 after receiving the INVITE call request message.
Step 306, the service proxy server sends the INVITE call request message to the core network to request to call the called user. The core network replies with 100 temporary response after receiving the INVITE call request message.
Step 307, after the called user rings, the core network replies with 180 ring response to the service proxy server. The service proxy server delivers the 180 ring response to the AS2.
Step 308, the AS2 sends the 180 ring response to the service proxy server. The service proxy server delivers the 180 ring response to the core network to notify the calling user that the called user is ringing.
Step 309, the called user answers. The core network replies with 200 answer response to the service proxy server. The service proxy server replies with acknowledge message (ACK) to the core network.
Step 310, the service proxy server delivers the 200 answer response to the AS2. The AS2 replies with the acknowledge message (ACK) to the service proxy server.
Step 311, the AS2 sends the 200 answer response to the service proxy server. The service proxy server replies with acknowledge message (ACK) to the AS2 and reports a called user answer event to the AS 1.
Step 312, the service proxy server sends the 200 answer response to the core network to notify the calling user that the called user is answering. The core network replies with acknowledge message (ACK) to the service proxy server.
Step 313, the service proxy server reports an accounting event report to the AS 1.
Step 314, if the call continues, the AS1 continues to send an accounting request message to the service proxy server to request for accounting.
Step 315, the called user hangs up. The core network sends a BYE request to the service proxy server. The service proxy server sends the BYE request to the AS2.
Step 316, the AS2 replies with 200 OK response of BYE to the service proxy server. The service proxy server replies with the 200 OK response of BYE to the core network.
Step 317, the AS2 sends the BYE request to the service proxy server to request to terminal the session of the calling user. The service proxy server replies with 200 OK response of BYE to the AS2.
Step 318, the service proxy server reports the accounting event report and the called user on-hook event to the AS 1. The AS 1 sends a call release instruction to the service proxy server.
Step 319, the service proxy server sends the BYE request to the core network to release the session of the calling user.
Step 320, the core network replies with the 200 OK response of BYE to the service proxy server.

Based on the implementation flow given in this embodiment, during actual application, if the original service is an SIP service and the newly added service is a CAMEL service, then steps 302 to 304 are as follows:
the service proxy server generates the INVITE message to trigger the AS1 bearing the SIP service; the AS1 sends the INVITE call request message to the service proxy server according to the service logic of the AS 1; and the service proxy server generates the InitialDP message to trigger the AS2 bearing the CAMEL service according to the INVITE call request message and/or the INVITE message sent by the core network, and the preset configuration information. In such case, the AS1 is an application server bearing the SIP service and the AS2 is an application server bearing the CAMEL service.

In order to implement the above method, the present invention also provides a system for nesting different types of services. As shown in Fig. 1, the system comprises: a core network, a service proxy server, and at least one application server.

The core network is configured to send an INVITE message to the service proxy server according to the subscription information of a user to initiate service trigger.

The service proxy server is provided between the core network and the application service, and is configured to trigger a first application server of a service type according to the received INVITE message and preset configuration information, and further trigger a second application server of another service type according to an event request message sent by the first application server and/or the INVITE message sent by the core network and the configuration information.

The application server is configured to trigger the corresponding service of the application server according to a trigger message of the service proxy server and sends an event request message to the service proxy server.

The first application server is an application server bearing an SIP service, and the second application server is an application server bearing a CAMEL service.

The service proxy server is further configured to receive an INVITE call request sent by the AS2, send the INVITE call request to the core network to request to call the called user.

The service proxy server is further configured to, after the called user rings, receive a ring response sent by the core network and deliver the ring response to the AS2, and is further configured to receive the ring response sent by the AS2 and send the ring response to the core network to notify the calling user that the called user is ringing.

The service proxy server is further configured to, after the called user answers, receive an answer response sent by the core network and deliver the answer response to the AS2, and is further configured to receive the answer response sent by the AS2 and send the answer response to the core network to notify the calling user that the called user is answering, and is further configured to report an accounting event report to the AS 1.

The service proxy server is further configured to, after the called user hangs up, receive a BYE request sent by the AS2 and send the BYE request to the core network to notify the calling user that the called user hangs up, and is further configured to report an on-hook event to the AS1 and receive a call release instruction sent by the AS 1.

The above description is only to illustrate the preferred embodiments but not to limit the present invention. Although the invention has been explained in relation to its preferred embodiment(s) as mentioned above, it is to be understood that many other possible modifications and variations can be made without departing from the scope of the present invention, which is defined by the claims.

## Claims

1. A method for nesting different types of services, **characterized by** comprising:
a core network sending (201) an INVITE message to a service proxy server according to subscription information of a user to initiate service trigger; and
the service proxy server triggering (202) a first application server AS1, of a service type according to the received INVITE message and preset configuration information, and further triggering (204) a second application server, AS2, of another service type according to an event request message sent by the first application server, AS1, and/or the INVITE message sent by the core network and the configuration information;
wherein, the first application server, AS1, is an application server bearing a Customized Applications for Mobile network Enhanced Logic, CAMEL, service, and the second application server, AS2, is an application server bearing a Session Initiation Protocol, SIP, service; and
the service proxy server triggering the second application server, AS2, of another service type according to the event request message sent by the first application server, AS1, and/or the INVITE message sent by the core network and the configuration information comprises: when the service proxy server generates an InitialDP message to trigger the first application server bearing the CAMEL service, the first application server, AS1, sending an accounting request message to the service proxy server according to a service logic of the first application server, AS1, and the service proxy server generating the INVITE message to trigger the second application server, AS2, bearing the SIP service according to the accounting request message and/or the INVITE message sent by the core network, and the preset configuration information;
or,
the first application server, AS1, is an application server bearing an SIP service, and the second application server, AS2, is an application server bearing a CAMEL service; and
when the service proxy server generates the INVITE message to trigger the first application server bearing the SIP service, the first application server sending an INVITE call request message to the service proxy server according to a service logic of the first application server, AS1, and the service proxy server generating an InitialDP message to trigger the second application server, AS2, bearing the CAMEL service according to the INVITE call request message and/or the INVITE message sent by the core network, and the preset configuration information.

2. The method according to claim 1, **characterized by** further comprising: after the first application server, AS1, and the second application server, AS2, are triggered, the second application server, AS2, sending the INVITE call request message to the core network via the service proxy server to request to call a called user.

3. The method according to claim 2, **characterized by** further comprising: after the called user rings, the core network delivering a ring response to the second application server, AS2, via the service proxy server, and then the second application server, AS2, sending the ring response to the core network via the service proxy server to notify a calling user that the called user is ringing.

4. The method according to claim 2, **characterized by** further comprising: after the called user answers, the core network delivering an answer response to the second application server, AS2, via the service proxy server, the second application server, AS2, reporting a called user answer event to the first application server and sending the answer response to the core network via the service proxy server to notify a calling user that the called user is answering, and the service proxy server reporting an accounting event report to the first application server, AS1.

5. The method according to claim 2, 3 or 4, **characterized by** further comprising: after the called user hangs up, the core network sending a BYE request to the second application server, AS2, via the service proxy server, the second application server, AS2, sending the BYE request to the core network via the service proxy server to request to terminate a session of the calling user, the service proxy server reporting the accounting event report and a called user on-hook event to the first application server, AS1, and the first application server, AS1, sending a call release instruction to the service proxy server.

6. A system for nesting different types of services, **characterized by** comprising: a core network, a service proxy server, and at least one application server, wherein
the core network is configured to send (201) an INVITE message to a service proxy server according to subscription information of a user to initiate service trigger;
the service proxy server is provided between the core network and the application service, and is configured to trigger (202) a first application server, AS1, of a service type according to the received INVITE message and preset configuration information, and further trigger (202) a second application server, AS2, of another service type according to an event request message sent by the first application server, AS1, and/or the INVITE message sent by the core network and the configuration information; and
the application server is configured to trigger a corresponding service according to a trigger message of the service proxy server, and send the event request message to the service proxy server;
wherein the first application server, AS1, is an application server bearing a Customized Applications for Mobile network Enhanced Logic, CAMEL, service, and the second application server, AS2, is an application server bearing a Session Initiation Protocol, SIP, service; and
the service proxy server is further configured to receive an INVITE call request sent by the second application server, AS2, and send the INVITE call request to the core network to request to call a called user.

7. The system according to claim 6, **characterized in that** the service proxy server is further configured to, after a called user rings, receive a ring response sent by the core network and deliver the ring response to the second application server, AS2; and is further configured to receive the ring response sent by the second application server, AS2, and send the ring response to the core network to notify a calling user that the called user is ringing, and
after the called user answers, receive an answer response sent by the core network and deliver the answer response to the second application server, AS2;
and is further configured to receive an answer response sent by the second application server, AS2, and send the answer response to the core network to notify the calling user that the called user is answering; and
is further configured to report an accounting event report to the first application server, AS1.

8. The system according to claim 6 or 7, **characterized in that** the service proxy server is further configured to, after the called user hangs up, receive a BYE request sent by the second application server, AS1, and send the BYE request to the core network to notify the calling user that the called user hangs up; and
is further configured to report an on-hook event to the first application server, AS1, and receive a call release instruction sent by the first application server, AS1.

## Patentansprüche

1. Ein Verfahren zum Verschachteln verschiedener Diensttypen, **dadurch gekennzeichnet, dass** dasselbe folgende Schritte aufweist:
Senden (201) einer INVITE-Nachricht gemäß Teilnahmeinformationen eines Benutzers an einen Dienstproxyserver durch ein Kernnetzwerk, um einen Diensttrigger zu initiierten; und
Triggern (202) eines ersten Anwendungsservers, AS1, eines Diensttyps gemäß der empfangenen INVITE-Nachricht und voreingestellten Konfigurationsinformationen durch den Dienstproxyserver und ferner Triggern (204) eines zweiten Anwendungsservers, AS2, eines anderen Diensttyps gemäß einer durch den ersten Anwendungsserver, AS1, gesendeten Ereignisanforderungsnachricht und/oder der durch das Kernnetzwerk gesendeten INVITE-Nachricht und den Konfigurationsinformationen;
wobei der erste Anwendungsserver, AS1, ein Anwendungsserver ist, der einen Customized-Applications-for-Mobile-network-Enhanced-Logic(CAMEL)-Dienst, trägt, und der zweite Anwendungsserver, AS2, ein Anwendungsserver ist, der einen Session-Initiation-Protocol(SIP)-Dienst, trägt; und
der Schritt des Triggerns des zweiten Anwendungsservers, AS2, eines anderen Diensttyps gemäß der durch den ersten Anwendungsserver, AS1, gesendeten Ereignisanforderungsnachricht und/oder der durch das Kernnetzwerk gesendeten INVITE-Nachricht und den Konfigurationsinformationen durch den Dienstproxyserver folgende Schritte aufweist: Senden einer Abrechnungsanforderungsnachricht gemäß einer Dienstlogik des ersten Anwendungsservers, AS1, an den Dienstproxyserver durch den ersten Anwendungsserver, AS1, wenn der Dienstproxyserver eine InitialDP-Nachricht erzeugt, um den ersten Anwendungsserver, der den CAMEL-Dienst trägt, zu triggern, und Erzeugen der INVITE-Nachricht gemäß der Abrechnungsanforderungsnachricht und/oder der durch das Kernnetzwerk gesendeten INVITE-Nachricht und der voreingestellten Konfigurationsinformationen durch den Dienstproxyserver, um den zweiten Anwendungsserver, AS2, der den SIP-Dienst trägt, zu triggern;
oder
der erste Anwendungsserver, AS1, ein Anwendungsserver ist, der einen SIP-Dienst trägt, und der zweite Anwendungsserver, AS2, ein Anwendungsserver ist, der einen CAMEL-Dienst trägt; und
Senden einer INVITE-Anrufanforderungsnachricht gemäß einer Dienstlogik des ersten Anwendungsservers, AS1, an den Dienstproxyserver durch den ersten Anwendungsserver, wenn der Dienstproxyserver die INVITE-Nachricht erzeugt, um den ersten Anwendungsserver, der den SIP-Dienst trägt, zu triggern, und Erzeugen einer InitialDP-Nachricht gemäß der INVITE-Anrufanforderungsnachricht und/oder der durch das Kernnetzwerk gesendeten INVITE-Nachricht und der voreingestellten Konfigurationsinformationen durch den Dienstproxyserver, um den zweiten Anwendungsserver, AS2, der den CAMEL-Dienst trägt, zu triggern.

2. Das Verfahren gemäß Anspruch 1, **dadurch gekennzeichnet, dass** dasselbe ferner folgenden Schritt aufweist: Senden der INVITE-Anrufanforderungsnachricht über den Dienstproxyserver an das Kernnetzwerk durch den zweiten Anwendungsserver, AS2, um anzufordern, dass ein angerufener Benutzer angerufen wird, nachdem der erste Anwendungsserver, AS1, und der zweite Anwendungsserver, AS2, getriggert wurden.

3. Das Verfahren gemäß Anspruch 2, **dadurch gekennzeichnet, dass** dasselbe ferner folgende Schritte aufweist: Liefern eines Anläuten-Ansprechens an den zweiten Anwendungsserver, AS2, über den Dienstproxyserver durch das Kernnetzwerk, nachdem der angerufene Benutzer anläutet, und danach Senden des Anläuten-Ansprechens an das Kernnetzwerk über den Dienstproxyserver durch den zweiten Anwendungsserver, AS2, um einen anrufenden Benutzer darüber zu benachrichtigen, dass der angerufene Benutzer anläutet.

4. Das Verfahren gemäß Anspruch 2, **dadurch gekennzeichnet, dass** dasselbe ferner folgende Schritte aufweist: Liefern eines Antwort-Ansprechens an den zweiten Anwendungsserver, AS2, über den Dienstproxyserver durch das Kernnetzwerk, nachdem der angerufene Benutzer antwortet, Berichten eines Antwortereignisses des angerufenen Benutzers an den ersten Anwendungsserver durch den zweiten Anwendungsserver, AS2, und Senden des Antwort-Ansprechens an das Kernnetzwerk über den Dienstproxyserver, um einen anrufenden Benutzer darüber zu benachrichtigen, dass der angerufene Benutzer antwortet, und Berichten eines Abrechnungsereignisberichts an den ersten Anwendungsserver, AS1, durch den Dienstproxyserver.

5. Das Verfahren gemäß Anspruch 2, 3 oder 4, **dadurch gekennzeichnet, dass** dasselbe ferner folgende Schritte aufweist: Senden einer BYE-Anforderung an den zweiten Anwendungsserver, AS2, über den Dienstproxyserver durch das Kernnetzwerk, nachdem der angerufene Benutzer auflegt, Senden der BYE-Anforderung an das Kernnetzwerk über den Dienstproxyserver durch den zweiten Anwendungsserver, AS2, um anzufordern, dass eine Sitzung des anrufenden Benutzers beendet wird, Berichten des Abrechnungsereignisberichts und eines Hörerauflegeereignisses des angerufenen Benutzers an den ersten Anwendungsserver, AS1, durch den Dienstproxyserver und Senden einer Anruffreigabeanweisung an den Dienstproxyserver durch den ersten Anwendungsserver, AS1.

6. Ein System zum Verschachteln verschiedener Diensttypen, **dadurch gekennzeichnet, dass** dasselbe folgende Merkmale aufweist: ein Kernnetzwerk, einen Dienstproxyserver und zumindest einen Anwendungsserver, wobei
das Kernnetzwerk konfiguriert ist, eine INVITE-Nachricht gemäß Teilnahmeinformationen eines Benutzers an einen Dienstproxyserver zu senden (201), um einen Diensttrigger zu initiierten;
der Dienstproxyserver zwischen dem Kernnetzwerk und dem Anwendungsdienst bereitgestellt ist und konfiguriert ist, einen ersten Anwendungsserver, AS1, eines Diensttyps gemäß der empfangenen INVITE-Nachricht und den voreingestellten Konfigurationsinformationen zu triggern (202) und ferner einen zweiten Anwendungsserver, AS2, eines anderen Diensttyps gemäß einer durch den ersten Anwendungsserver, AS1, gesendeten Ereignisanforderungsnachricht und/oder der durch das Kernnetzwerk gesendeten INVITE-Nachricht und den Konfigurationsinformationen zu triggern (202); und
der Anwendungsserver konfiguriert ist, einen entsprechenden Dienst gemäß einer Triggernachricht des Dienstproxyservers zu triggern und die Ereignisanforderungsnachricht an den Dienstproxyserver zu senden;
wobei der erste Anwendungsserver, AS1, ein Anwendungsserver ist, der einen Customized-Applications-for-Mobile-Network-Enhanced-Logic(CAMEL)-Dienst, trägt, und der zweite Anwendungsserver, AS2, ein Anwendungsserver ist, der einen Session-lnitiation-Protocol(SIP)-Dienst, trägt; und
der Dienstproxyserver ferner konfiguriert ist, eine durch den zweiten Anwendungsserver, AS2, gesendete INVITE-Anrufanforderung zu empfangen und die INVITE-Anrufanforderung an das Kernnetzwerk zu senden, um anzufordern, dass ein angerufener Benutzer angerufen wird.

7. Das System gemäß Anspruch 6, **dadurch gekennzeichnet, dass** der Dienstproxyserver ferner konfiguriert ist, nachdem ein angerufener Benutzer anläutet, ein durch das Kernnetzwerk gesendetes Anläuten-Ansprechen zu empfangen und das Anläuten-Ansprechen an den zweiten Anwendungsserver, AS2, zu liefern; und ferner konfiguriert ist, das durch den zweiten Anwendungsserver, AS2, gesendete Anläuten-Ansprechen zu empfangen und das Anläuten-Ansprechen an das Kernnetzwerk zu senden, um einen anrufenden Benutzer darüber zu benachrichtigen, dass der angerufene Benutzer anläutet, und
nachdem der angerufene Benutzer antwortet, ein durch das Kernnetzwerk gesendetes Antwort-Ansprechen zu empfangen und das Antwort-Ansprechen an den zweiten Anwendungsserver, AS2, zu liefern;
und ferner konfiguriert ist, ein durch den zweiten Anwendungsserver, AS2, gesendetes Antwort-Ansprechen zu empfangen und das Antwort-Ansprechen an das Kernnetzwerk zu senden, um den anrufenden Benutzer darüber zu benachrichtigen, dass der angerufene Benutzer antwortet; und
ferner konfiguriert ist, einen Abrechnungsereignisbericht an den ersten Anwendungsserver, AS1, zu berichten.

8. Das System gemäß Anspruch 6 oder 7, **dadurch gekennzeichnet, dass** der Dienstproxyserver ferner konfiguriert ist, nachdem der angerufene Benutzer auflegt, eine durch den zweiten Anwendungsserver, AS1, gesendete BYE-Anforderung zu empfangen und die BYE-Anforderung an das Kernnetzwerk zu senden, um den anrufenden Benutzer darüber zu benachrichtigen, dass der angerufene Benutzer auflegt; und
ferner konfiguriert ist, ein Hörerauflegeereignis an den ersten Anwendungsserver, AS1, zu berichten und eine durch den ersten Anwendungsserver, AS1, gesendete Anruffreigabeanweisung zu empfangen.

## Revendications

1. Procédé d'imbrication de différents types de services, **caractérisé en ce qu'**il comprend :
l'envoi (201) par un réseau central d'un message INVITE à un serveur proxy de services en fonction d'informations d'abonnement d'un utilisateur pour lancer un déclencheur de service ; et
le déclenchement (202) par le serveur proxy de services d'un premier serveur d'application, AS1, d'un type de service en fonction du message INVITE reçu et d'informations de configuration prédéfinies, et le déclenchement en outre (204) d'un deuxième serveur d'application, AS2, d'un autre type de service en fonction d'un message de demande d'événement transmis par le premier serveur d'application, AS1, et/ou du message INVITE transmis par le réseau central et des informations de configuration ;
dans lequel le premier serveur d'application, AS1, est un serveur d'application portant un service de logique améliorée d'applications personnalisées pour réseau mobile, CAMEL, et le deuxième serveur d'application, AS2, est un serveur d'application portant un service de protocole d'ouverture de session, SIP ; et
le déclenchement par le serveur proxy de services du deuxième serveur d'application, AS2, d'un autre type de service en fonction du message de demande d'événement transmis par le premier serveur d'application, AS1, et/ou du message INVITE transmis par le réseau central et des informations de configuration comprend : quand le serveur proxy de services génère un message InitialDP pour déclencher le premier serveur d'application portant le service CAMEL, l'envoi par le premier serveur d'application, AS1, d'un message de demande comptable au serveur proxy de service en fonction d'une logique de service du premier serveur d'application, AS1, et la génération par le serveur proxy de services du message INVITE pour déclencher le deuxième serveur d'application, AS2, portant le service SIP en fonction du message de demande comptable et/ou du message INVITE transmis par le réseau central et des informations de configuration prédéfinies ;
ou
le premier serveur d'application, AS1, est un serveur d'application portant un service SIP et le deuxième serveur d'application, AS2, est un serveur d'application portant un service CAMEL ; et
quand le serveur proxy de services génère le message INVITE pour déclencher le premier serveur d'application portant le service SIP, l'envoi par le premier serveur d'application d'un message de demande d'appel INVITE au serveur proxy de services en fonction d'une logique de service du premier serveur d'application, AS1, et la génération par le serveur proxy de services d'un message InitialDP pour déclencher le deuxième serveur d'application, AS2, portant le service CAMEL en fonction du message de demande d'appel INVITE et/ou du message INVITE transmis par le réseau central et des informations de configuration prédéfinies.

2. Procédé selon la revendication 1, **caractérisé en ce qu'**il comprend en outre : après que le premier serveur d'application, AS1, et le deuxième serveur d'application, AS2, sont déclenchés, l'envoi par le deuxième serveur d'application, AS2, du message de demande d'appel INVITE au réseau central par le biais du serveur proxy de services pour demander d'appeler un utilisateur appelé.

3. Procédé selon la revendication 2, **caractérisé en ce qu'**il comprend en outre : après que l'utilisateur appelé sonne, la fourniture par le réseau central d'une réponse de sonnerie au deuxième serveur d'application, AS2, par le biais du serveur proxy de services et ensuite l'envoi par le deuxième serveur d'application, AS2, de la réponse de sonnerie au réseau central par le biais du serveur proxy de services pour informer un utilisateur appelant que l'utilisateur appelé sonne.

4. Procédé selon la revendication 2, **caractérisé en ce qu'**il comprend en outre : après que l'utilisateur appelé décroche, la fourniture par le réseau central d'une réponse de décrochage au deuxième serveur d'application, AS2, par le biais du serveur proxy de services, le rapport par le deuxième serveur d'application, AS2, d'un événement de décrochage d'utilisateur appelé au premier serveur d'application et l'envoi de la réponse de décrochage au réseau central par le biais du serveur proxy de services pour informer un utilisateur appelant que l'utilisateur appelé décroche, et le rapport par le serveur proxy de services d'un rapport d'événement comptable au premier serveur d'application, AS1.

5. Procédé selon la revendication 2, 3 ou 4, **caractérisé en ce qu'**il comprend en outre : après que l'utilisateur appelé raccroche, l'envoi par le réseau central d'une demande BYE au deuxième serveur d'application, AS2, par le biais du serveur proxy de services, l'envoi par le deuxième serveur d'application, AS2, de la demande BYE au réseau central par le biais du serveur proxy de services pour demander de terminer une session de l'utilisateur appelant, le rapport par le serveur proxy de services du rapport d'événement comptable et un événement de raccrochage d'utilisateur appelé au premier serveur d'application, AS1, et l'envoi par le premier serveur d'application, AS1, d'une instruction de libération d'appel au serveur proxy de services.

6. Système d'imbrication de différents types de services, **caractérisé en ce qu'**il comprend un réseau central, un serveur proxy de services et au moins un serveur d'application, dans lequel
le réseau central est configuré pour envoyer (201) un message INVITE à un serveur proxy de services en fonction d'informations d'abonnement d'un utilisateur pour lancer un déclencheur de service ;
le serveur proxy de services est disposé entre le réseau central et le service d'application et est configuré pour déclencher (202) un premier serveur d'application, AS1, d'un type de service en fonction du message INVITE reçu et d'informations de configuration prédéfinies, et déclencher en outre (202) un deuxième serveur d'application, AS2, d'un autre type de service en fonction d'un message de demande d'événement transmis par le premier serveur d'application, AS1, et/ou du message INVITE transmis par le réseau central et des informations de configuration ; et
le serveur d'application est configuré pour déclencher un service correspondant en fonction d'un message de déclenchement du serveur proxy de services et envoyer le message de demande d'événement au serveur proxy de services ;
dans lequel le premier serveur d'application, AS1, est un serveur d'application portant un service de logique améliorée d'applications personnalisées pour réseau mobile, CAMEL, et le deuxième serveur d'application, AS2, est un serveur d'application portant un service de protocole d'ouverture de session, SIP ; et
le serveur proxy de services est configuré en outre pour recevoir une demande d'appel INVITE transmise par le deuxième serveur d'application, AS2, et envoyer la demande d'appel INVITE au réseau central pour demander d'appeler un utilisateur appelé.

7. Système selon la revendication 6, **caractérisé en ce que** le serveur proxy de services est configuré en outre pour, après qu'un utilisateur appelé sonne, recevoir une réponse de sonnerie transmise par le réseau central et fournir la réponse de sonnerie au deuxième serveur d'application, AS2 ; et est configuré en outre pour recevoir la réponse de sonnerie transmise par le deuxième serveur d'application, AS2, et envoyer la réponse de sonnerie au réseau central pour informer un utilisateur appelant que l'utilisateur appelé sonne, et, après que l'utilisateur appelé décroche, recevoir une réponse de décrochage transmise par le réseau central et fournir la réponse de décrochage au deuxième serveur d'application, AS2 ; et est configuré en outre pour recevoir la réponse de décrochage transmise par le deuxième serveur d'application, AS2, et envoyer la réponse de décrochage au réseau central pour informer l'utilisateur appelant que l'utilisateur appelé décroche ; et est configuré en outre pour rapporter un rapport d'événement comptable au premier serveur d'application, AS1.

8. Système selon la revendication 6 ou 7, **caractérisé en ce que** le serveur proxy de services est configuré en outre pour, après que l'utilisateur appelé raccroche, recevoir une demande BYE transmise par le deuxième serveur d'application, AS1, et envoyer la demande BYE au réseau central pour informer l'utilisateur appelant que l'utilisateur appelé raccroche ; et est configuré en outre pour rapporter un événement de raccrochage au premier serveur d'application, AS1, et recevoir une instruction de libération d'appel transmise par le premier serveur d'application, AS1.
